# EUROPEAN PATENT SPECIFICATION

(11) **EP 3 527 538 B1**
(45) Date of publication and mention of the grant of the patent: **19.05.2021**
(21) Application number: 18382099.2
(22) Date of filing: 20.02.2018
(51) Int. Cl.: C02F 3/00, C02F 1/467, C02F 3/34, C02F 1/461

(54) **METHOD FOR SIMULTANEOUS PRODUCTION OF CHLORINE AND CARBON NEUTRAL COMPOUNDS USING A BIOELECTROCHEMICAL SYSTEM**
METHODE ZUR GLEICHZEITIGEN HERSTELLUNG VON CHLOR UND KOHLENSTOFFNEUTRALEN VERBINDUNGEN DURCH VERWENDUNG EINES BIOELEKTROCHEMISCHEN SYSTEM
MÉTHODE POUR LA PRODUCTION SIMULTANÉE DE CHLORE ET DE COMPOSÉS NEUTRES EN CARBONE EN UTILISANT UN SYSTÈME BIOÉLECTROCHIMIQUE

(43) Date of publication of application: 21.08.2019
(73) Proprietor: FCC Aqualia, S.A., 28050 Madrid (ES)
(72) Inventor: Batlle Vilanova, Pau, 28050 Madrid (ES); Monsalvo García, Víctor Manuel, 28050 Madrid (ES); Colprim Galceran, Jesús, 28050 Madrid (ES); Balaguer Condom, Maria Dolors, 28050 Madrid (ES); Puig Broch, Sebastià, 28050 Madrid (ES); Icaran López, Pilar, 28050 Madrid (ES); Rogalla, Frank, 28050 Madrid (ES)
(74) Representative: Clarke Modet & Co.

(56) References cited:
- WO-A1-2014/043690
- WO-A2-2009/155587
- WO-A2-2011/087821
- VENKATA MOHAN S ET AL: "Microbial catalyzed electrochemical systems: A bio-factory with multi-facet applications", BIORESOURCE TECHNOLOGY, vol. 165, 21 March 2014 (2014-03-21), pages 355-364, XP028848439, ISSN: 0960-8524, DOI: 10.1016/J.BIORTECH.2014.03.048

## Description

### FIELD OF THE INVENTION

The present invention is related to the electrochemical field, and more particularly to electrochemical processes using Microbial Electrochemical Technologies (METs). Particularly, the present invention is related to a method for simultaneous production of chlorine compounds and carbon-neutral compounds where electrochemical and bioelectrochemical reactions are combined.

### BACKGROUND OF THE INVENTION

METs represent a family of technologies where bacteria interact with electrically conductive material. For instance, Microbial Fuel Cell (MFC) converts chemical energy into electrical energy by using microorganisms. This allows the oxidation of organic matter (chemical energy) by microorganisms that efficiently transfer electrons to an electrode (anode). The circuit is closed by the presence of a cathode, so electricity can be harvested. Other type of METs are the Microbial Electrolysis Cells (MEC), where electrodes are artificially polarized by means of a potentiostat or a power source and the microbial community can interact with a conductive surface to perform either oxidation or reduction reactions. From a general standpoint, the devices used in the frame of METs, are the so-called bioelectrochemical systems (BES).

In BES, at least one of the reactions is catalyzed by microorganisms. Electrodes can be polarized at different potentials depending on the theoretical reduction/oxidation potential of the targeted reactions in the anodic and/or the cathodic compartments. Although in BES, an oxidation reaction is always coupled to a counter-part reduction reaction, and vice versa, its economic feasibility is limited, since usually only one of the reactions is economically attractive.

Market replication of BES makes necessary the accomplishment of oxidation and reduction reactions that can be carried out simultaneously, being both reactions economically attractive to overcome current costs limitations. Processes like bioelectrochemical reduction of CO₂ to biomethane (cathode) have been coupled to electrochemical water oxidation (anode), which results in low-value products (biomethane and oxygen) that are not sufficiently attractive and limit their industrial application.

In this sense, the first patent related to CO₂ reduction to methane in a BES was published in 2009 (WO2009155587), which describes a method for the direct production of methane in a cathode containing methanogenic microorganisms, where electrons were obtained from acetate oxidation in the anode. Subsequent patents about the bioelectrochemical transformation of CO₂ were focused on the production of hydrogen and other carbon-bearing compounds (WO2011087821, WO2014043690), using water as electron donor in the anode, which again limits economic feasibility due to the low oxygen price. Finally, in 2011 biological-assisted water electrolysis was patented for improving biomethane production (WO2011000084). All these inventions are focused on CO₂ reduction in the BES cathode compartment, being water oxidation reaction the most widely used in the anode chamber. According to market values of the end-products and operation costs, these approaches lack of economic interest to be industrialized.

Alternatively, other oxidation reactions at the anode chamber can be coupled to CO₂ reduction in the cathode, including (i) organic matter oxidation, (ii) ammonium oxidation (nitrification), or (iii) chlorine compounds production. Among these, chlorine compounds show the highest economic value and application potential. Chlorine compounds production from brine is a well-known procedure carried out in electrochlorination devices (i.e. WO2011083443, WO2010027825, WO2010027819, WO2007130851). These inventions describe electrolyzers wherein chlorine compounds are produced in the anode, and hydrogen and/or sodium hydroxide are produced in the cathode by means of electrochemical reactions driven by external electricity supply. Differently, WO2010027825 and WO2010027819 describe a different three-chamber reactor configuration, instead of the most widely commercialized two-chamber electrochlorination cells. However, electrochlorination cells have never been coupled to microbiological based reactions so far.

BES have been evaluated as alternative for CO₂ reduction using a biocathode (WO2009155587, WO2011000084, WO2011087821, WO2014043690). However, none of such applications allow the production of chlorine compounds production in the anode. These disinfection agents can be used for *in situ* hygienization of the cathode effluent that may contain microorganisms grown in the biocathode. Other uses of the chlorine compounds produced are also possible.

Coupling chlorine compounds and carbon-neutral compounds production in BES not only enables their economic feasibility and facilitate their market replication, but also synergistic processes have been observed, which favor both oxidation and reduction reactions.

### SUMMARY OF INVENTION

Bioelectrochemical reduction of CO₂ to carbon-neutral compounds has been reported to be technically feasible. However, the economic feasibility is frankly limited within the current energy market scenario. The present invention provides a combination of electrochemical and bioelectrochemical reactions results in an economically attractive process that overcomes current cost limitations.

The invention discloses a method for simultaneous production of chlorine compounds and carbon neutral compounds using a bioelectrochemical system where bioelectroactive microorganisms catalyze the simultaneous production of chlorine compounds and carbon-neutral compounds (i.e. biomethane, carboxylic acids, alcohols, etc.) from reject streams, such as undesired brine or other chloride-containing solutions, and CO₂, respectively.

The method for simultaneous production of chlorine compounds and carbon-neutral compounds a bioelectrochemical system, that comprises an anode chamber (1) with an anode comprising an electrochemical catalyst, a cathode chamber (5) wherein the cathode electrode (6) comprising a biocompatible conductive material, which allows the bioelectrochemical conversion of CO₂ dissolved in an aqueous stream (7) to carbon-neutral compounds (8) and clarified water (11), wherein the electrochemical catalyst in the anode (4) and/or biocompatible conductive material in the cathode (6) are carbon-based electrode, such as carbon foam, carbon paper, carbon cloth, carbon felt, carbon wool, carbon nanotubes, carbon fibers, activated carbon, vitreous carbon or graphite (in any form); graphene, conductive polymers, dimensionally stable electrodes (DSA), electric conductive diamond (ECD), such as boron-doped diamond (BDD); cobalt, copper, gold, iridium, iron, nickel, palladium, platinum, ruthenium, silver, stainless steel, tin, titanium, tungsten, and combinations thereof, a power source (9) and at least one membrane (10) separating the anode chamber (1) and the cathode chamber (5), characterized by the following steps:
a) adding bioelectroactive microorganisms selected from *Acetitomalacum, Acetoanaerobium, Acetobacterium, Azospira, Blautia, Butyribacterium, Bacteroides, Clostridium, Desulfobacterium, Eubacterium, Geobacter, Geovibrio, Megasphaera, Methanobacterium, Metanobrevibacter, Methanococcus, Morella, Rhodobacter, Sporomusa, Sulfospirillium* and/or *Thermoanaerobacter,* and biocompatible conductive material in the cathode chamber (5);
b) feeding an aqueous stream (7) into the cathode chamber (5) and converting dissolved CO₂ in the aqueous stream (7) into carbon neutral compounds (8);
c) feeding a chloride-containing solution (2) in the anode chamber (1) and transforming the chloride-containing solution (2) to chlorine compounds (3) in presence of an electrochemical catalyst;
wherein a source of electrons is supplied in whole or in part from the electrochemical oxidation of chloride-containing solution (2) to chlorine compounds (3) in the anode chamber (1) and transferred through an external circuit to the cathode (5).

Another aspect of the invention is that bioelectroactive microorganisms in the cathode chamber (5) are suspended in the solution and/or in the form of attached biofilm on the cathode (6) surface.

Microorganisms attached to the biocompatible conductive material placed in the cathode and/or suspended in the solution (planktonic community) are capable to reduce CO₂. This reaction requires a source of electrons, which are supplied in whole or in part from the electrochemical oxidation of chloride ions to chlorine in the anode chamber (1) and transferred through an external circuit to the cathode (5).

The bioelectrochemical system works with a potential difference between the anode (1) and cathode chambers (5) that result in a facilitated flow of electrons from the anode to the cathode. In the present invention voltage is applied, current is fixed, or anode or cathode half-potentials are fixed to allow chlorine compounds (3) and carbon-neutral compounds (8) production simultaneously. Various methods and devices can be used to provide electricity, either from renewable and/or conventional production methods.

Autotrophic CO₂-reducing microorganism inoculated in the cathode chamber (5) are capable of driving reduction of CO₂ to carbon-neutral compounds (8) using either electrons, hydrogen or both (Batlle-Vilanova, P. et al., 2015. Deciphering the electron transfer mechanisms for biogas upgrading to biomethane within a mixed culture biocathode. RSC Adv. 5, 52243-52251., Siegert, M. et al., 2015. Methanobacterium dominates biocathodic archaeal communities in methanogenic microbial electrolysis cells. ACS Sustain. Chem. Eng. 3, 1668-1676.; Batlle-Vilanova).

Another aspect of the invention is that the CO₂ dissolved in an aqueous stream (7) is fed into the cathode chamber (5) by direct injection in the cathode chamber or in a previous absorption unit where CO₂ is dissolved in an aqueous stream. Then, bioelectroactive microorganisms carry out CO₂ reduction to carbon-neutral compounds (8) in the cathode chamber (5).

Another aspect of the invention is that the carbon-neutral compounds (8) are produced from CO₂ either by direct reduction of electrons and/or using hydrogen as intermediate.

Another aspect of the invention is that the aqueous stream (7) is mineral water, groundwater, seawater, brackish water, reject water, wastewater, treated wastewater, or other water streams.

Another aspect of the invention is that the membrane (10) can be an anion exchange membrane, cation exchange membrane, or both and are installed in a 2-chamber or 3-chamber reactor.

Chloride-containing solution (2) is fed in the anode chamber (1) of the bioelectrochemical system to carry out electrochemical transformation of chloride ions to chlorine compounds (3) as disinfectants. The pH in the anode chamber determines the chlorine species produced dominated by pH controlled equilibrium reactions. Chloride-containing solution (2) can be obtained from different sources and contain different chloride salts, or combinations thereof. Another aspect of the invention is that the chloride-containing solution (2) can be obtained from different sources and contain different chloride salts, or combinations thereof, with a chloride concentration between 0.1 g L⁻¹ to 150 g L⁻¹.

The following characteristics are specific of the present invention and offer relevant advantages over others in the state-of-the-art:
- Simultaneous production of chlorine compounds (3) and carbon-neutral compounds (8) by combined synergistic electrochemical and bioelectrochemical processes in the anode (4) and the cathode (6) of a bioelectrochemical system, respectively.
- Production of chlorine compounds (3) from chloride solutions (2) in the anode chamber (1).
- Highly concentrated brines can be fed in the anode chamber (1) without affecting the microorganisms' activity in the cathode chamber (5).
- Reduction of emission of greenhouse gas (recycling of CO₂) by producing carbon-neutral compounds (8).
- Stable conditions are achieved in the cathode chamber (5) where bioelectroactive microorganisms produce carbon-neutral compounds (8) from CO₂.
- The method of the invention can be easily implemented in wastewater treatment plants where:
   ∘ CO₂ contained in biogas resulted from anaerobic digestion is used to obtain carbon-neutral compounds (8).
   ∘ Chlorine compounds (3) are obtained from chloride-containing solutions (2), including brines, which can be used for disinfection.

### BRIEF DESCRIPTION OF DRAWINGS

The following figures are described below. These illustrate the exemplary embodiments and are not limiting their scope.

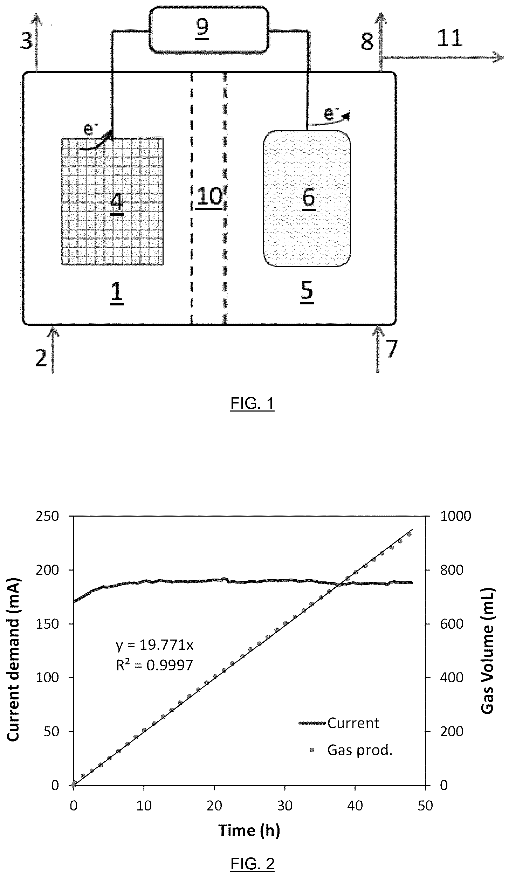

Figure 1 shows a scheme of a bioelectrochemical system as used in the invention comprising electrochemical catalyst in the anode and biocompatible conductive material and CO₂-reducing microorganisms in the cathode.
Figure 2 shows the time-course of methane production in the presence of *Methanobacterium* spp.. Operation conditions: cathode potential = -0.8 V vs SHE, cathode HRT = 6.2 h, anode HRT = 10.8 h, cationic membrane. During these experiments focused on methane production, chlorine compounds production was also detected in the anode of the system at concentration of 0.05 mg/L, corresponding to production rate of 4.6 µg/h.

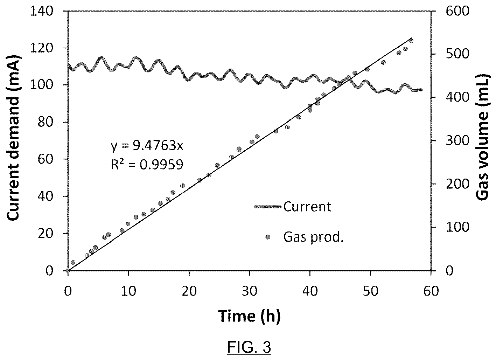

Figure 3 shows the time-course of methane production in the presence of *Methanobacterium* spp.. Operation conditions: cathode potential = -0.8 V vs SHE, cathode HRT = 12.5 h, anode HRT = 62 h, anionic and cationic membranes. During these experiments, chlorine compounds production was also detected in the anode of the system at concentration of 1 mg/L, corresponding to production rate of 16 µg/h.

### EXAMPLES OF THE INVENTION

### Example 1. Production of biomethane from CO₂.

The cathode was inoculated with a microbial cocktail enriched in *Methanobacterium* ssp. and graphite granules were used as biocompatible conductive material. The cell was operated at a constant cathode potential of -0.8 V *versus* the standard hydrogen electrode (SHE). Once stable operation was reached, the system can work under different operation conditions. Figure 2 shows the results obtained with an aqueous feed containing dissolved CO₂ (∼30 mM) at a cathode HRT of 6.2 h.

Average of five different tests under the same conditions demonstrated a methane production rate of 54.3 ± 2.0 mM_{CH4} day⁻¹, coulombic efficiency of 80.9 ± 2.8%, obtaining a biomethane with 78.6 ± 2.3% of methane.

### Example 2. Production of acetate, butyrate and alcohols from CO₂.

The cathode was inoculated with a microbial cocktail of carboxydotrophic microorganisms enriched in *Clostridium* ssp. and carbon cloth was used as biocompatible conductive material. The cell was operated at a constant cathode potential of -0.8 V *versus* the standard hydrogen electrode (SHE). The reactor was operated in fed-batch mode, periodically supplying CO₂ gas by direct sparging in aqueous solution (CO₂ ∼30 mM) in a recirculation vessel.

The final resulting effluent contain acetate (30 - 100 mmol of carbon per liter (mMC), butyrate (20 - 87 mMC), ethanol (3 - 20 mMC), butanol (0 - 5 mMC), and small amounts of other compounds, such as propionate, valerate and caproate, with overall coulombic efficiencies ranging from 40 to 85%

### Example 3. Anodic production of chlorine compounds

The electrochemical catalyst titanium coated with mixed metal oxides (Ti-MMO) was used in the anode of the BES device. The cell was operated at a constant anode potential of +1.4 V versus SHE. The reactor was fed with brine (100 g NaCI L⁻¹) in batch mode.

A chlorine concentration of 46 mg Cl₂ L⁻¹ was obtained in 25 h, reaching a chlorine production rate of 1.8 mg L⁻¹ day⁻¹. The coulombic efficiency obtained varied between 1-1.5%.

### Example 4. Coupling of biomethane and chlorine compounds production

The cathode was inoculated with a microbial cocktail enriched in *Methanobacterium* ssp. and graphite granules were used as biocompatible conductive material. The cell was operated at a constant cathode potential of -0.8 V versus the standard hydrogen electrode (SHE). The electrochemical catalyst titanium coated with mixed metal oxides (Ti-MMO) was used in the anode of the BES device. The cathode was fed with an aqueous solution containing dissolved CO₂ (-30 mM) at a cathode HRT of 12.5 h. The reactor was fed with brine (10 g NaCl L⁻¹), at an anode HRT of 62 h.

Figure 3 shows the results obtained during 50 hours of experiment. Methane was produced at the rate of 18.6 ± 0.1 mM_{CH4} day⁻¹, coulombic efficiency of 79.0 ± 2.0%, obtaining a biomethane with 89.4 ± 5.1% of methane.

Moreover, chlorine compounds production was observed in the anode, reaching effluent concentrations of 1 mg/L, which is sufficient to achieve disinfection in some applications (i.e. tertiary treatment of wastewater).

The Project leading to this application has received funding from the European Union's Horizon 2020 research and innovation programme under grant agreement No. 685793.

Part of the results subject to protection are the result of research carried out within the framework of the CIEN SMART GREEN GAS project, funded by the CDTI.

## Claims

1. Method for simultaneous production of chlorine compounds and carbon neutral compounds using a bioelectrochemical system, that comprises an anode chamber (1) with an anode comprising an electrochemical catalyst, a cathode chamber (5) with a cathode electrode (6) comprising a biocompatible conductive material, which allows the bioelectrical conversion of CO₂ dissolved in an aqueous stream to carbon neutral compounds (8) and clarified water (11), wherein the electrochemical catalyst in the anode (4) and/or biocompatible conductive material in the cathode (6) are carbon-based electrodes, such as carbon foam, carbon paper, carbon cloth, carbon felt, carbon wool, carbon nanotubes, carbon fibers, activated carbon, vitreous carbon or graphite (in any form); graphene, conductive polymers, dimensionally stable electrodes (DSA), electric conductive diamond (ECD), such as boron-doped diamond (BDD); cobalt, copper, gold, iridium, iron, nickel, palladium, platinum, ruthenium, silver, stainless steel, tin, titanium, tungsten, and combinations thereof, a power source (9) and at least one anion and/or cation exchange membrane (10) separating the anode chamber (1) and the cathode chamber (5), **characterized by** the following steps:
a) adding bioelectroactive microorganisms selected from *Acetitomalacum, Acetoanaerobium, Acetobacterium, Azospira, Blautia, Butyribacterium, Bacteroides, Clostridium, Desulfobacterium, Eubacterium, Geobacter, Geovibrio, Megasphaera, Methanobacterium, Metanobrevibacter, Methanococcus, Morella, Rhodobacter, Sporomusa, Sulfospirillium* and/or *Thermoanaerobacter,* and biocompatible conductive material in the cathode chamber (5);
b) feeding an aqueous stream (7) into the cathode chamber (5) and converting dissolved CO₂ in the aqueous stream (7) into carbon neutral compounds (8);
c) feeding a chloride-containing solution (2) in the anode chamber (1) and transforming the chloride-containing solution (2) to chlorine compounds (3) in presence of an electrochemical catalyst;
wherein a source of electrons is supplied in whole or in part from the electrochemical oxidation of chloride-containing solution (2) to chlorine compounds (3) in the anode chamber (1) and transferred through an external circuit to the cathode (5).

2. The method according to claim 1, wherein the aqueous stream (7) is mineral water, groundwater, seawater, brackish water, reject water, wastewater, treated wastewater, or other water streams.

3. The method according to claim 1, wherein the bioelectroactive microorganisms in the cathode chamber (5) are suspended in the solution and/or in the form of attached biofilm on the cathode electrode (6).

4. The method of any of claims 1-3, wherein the chloride-containing solution (2) contains chloride salts or combinations thereof with a chloride concentration between 0.1 g L⁻¹ to 150 g L⁻¹.

5. The method of any of claims 1-4, wherein the CO₂ is dissolved in the aqueous stream (7) by direct injection in the cathode chamber (5) or through a previous absorption unit.

6. The method of any of claims 1-5, wherein the carbon-neutral compounds (8) are produced from CO₂ either by direct reduction of electrons and/or using hydrogen as intermediate.

## Patentansprüche

1. Methode zur gleichzeitigen Herstellung von Chlorverbindungen und kohlenstoffneutralen Verbindungen durch Verwendung eines bioelektrochemischen Systems, das eine Anodenkammer (1) mit einer einen elektrochemischen Katalysator umfassenden Anode, eine Kathodenkammer (5) mit einer Kathodenelektrode (6), die ein bioverträgliches leitfähiges Material umfasst, das die bioelektrische Umwandlung von in einem wässrigen Strom gelöstem CO₂ in kohlenstoffneutrale Verbindungen (8) und geklärtes Wasser (11) ermöglicht, wobei der elektrochemische Katalysator in der Anode (4) und/oder das bioverträgliche leitfähige Material in der Kathode (6) Elektroden auf Kohlenstoffbasis sind, wie Kohlenstoffschaum, Kohlenstoffpapier, Kohlenstofftuch, Kohlenstofffilz, Kohlenstoffwolle, Kohlenstoffnanoröhren, Kohlenstofffasern, Aktivkohle, glasartiger Kohlenstoff oder Graphit (in jeglicher Form); Graphen, leitfähige Polymere, dimensionsstabile Elektroden (DSA), elektrisch leitfähiger Diamant (ECD), wie bordotierter Diamant (BDD); Kobalt, Kupfer, Gold, Iridium, Eisen, Nickel, Palladium, Platin, Ruthenium, Silber, rostfreier Stahl, Zinn, Titan, Wolfram und Kombinationen davon, eine Energiequelle (9) und mindestens eine Anionen- und/oder Kationenaustauschmembran (10), die die Anodenkammer (1) und die Kathodenkammer (5) trennt, umfasst, **gekennzeichnet durch** folgende Schritte:
a) Zugabe von bioelektroaktiven Mikroorganismen ausgewählt aus *Acetitomalacum, Acetoanaerobium, Acetobacterium, Azospira, Blautia, Butyribacterium, Bacteroides, Clostridium, Desulfobacterium, Eubacterium, Geobacter, Geovibrio, Megasphaera, Methanobacterium, Metanobrevibacter, Methanococcus, Morella, Rhodobacter, Sporomusa, Sulfospirillium* und/oder *Thermoanaerobacter,* und bioverträglichem leitfähigem Material in die Kathodenkammer (5);
b) Zuführen eines wässrigen Stroms (7) in die Kathodenkammer (5) und Umwandeln von gelöstem CO₂ in dem wässrigen Strom (7) in kohlenstoffneutrale Verbindungen (8);
c) Zuführen einer chloridhaltigen Lösung (2) in die Anodenkammer (1) und Überführen der chloridhaltigen Lösung (2) in Anwesenheit eines elektrochemischen Katalysators in Chlorverbindungen (3);
wobei eine Elektronenquelle ganz oder teilweise durch die elektrochemische Oxidation der chloridhaltigen Lösung (2) zu Chlorverbindungen (3) in der Anodenkammer (1) bereitgestellt und durch einen außenliegenden Kreislauf zur Kathode (5) weitergeleitet wird.

2. Methode gemäß Anspruch 1, wobei der wässrige Strom (7) Mineralwasser, Grundwasser, Meerwasser, Brackwasser, Reject-Wasser, Abwasser, aufbereitetes Abwasser oder andere Wasserströme ist.

3. Methode gemäß Anspruch 1, wobei die bioelektroaktiven Mikroorganismen in der Kathodenkammer (5) in der Lösung suspendiert sind und/oder in Form eines anhaftenden Biofilms auf der Kathodenelektrode (6) vorliegen.

4. Methode gemäß einem der Ansprüche 1-3, wobei die chloridhaltige Lösung (2) Chloridsalze oder Kombinationen davon mit einer Chloridkonzentration von 0,1 g L⁻¹ bis 150 g L⁻¹ enthält.

5. Methode gemäß einem der Ansprüche 1-4, wobei das CO₂ in dem wässrigen Strom (7) durch direkte Injektion in die Kathodenkammer (5) oder durch eine vorgeschaltete Absorptionseinheit gelöst wird.

6. Methode gemäß einem der Ansprüche 1-5, wobei die kohlenstoffneutralen Verbindungen (8) aus CO₂ entweder durch direkte Reduktion von Elektronen und/oder unter Verwendung von Wasserstoff als Zwischenstufe hergestellt werden.

## Revendications

1. Procédé pour la production simultanée de composés de chlore et de composés neutres de carbone en utilisant un système bioélectrochimique, qui comprend une chambre d'anode (1) avec une anode comprenant un catalyseur électrochimique, une chambre de cathode (5) avec une électrode de cathode (6) comprenant un matériau conducteur biocompatible, qui permet la conversion bioélectrique de CO₂ dissous dans un courant aqueux en composés neutres de carbone (8) et en eau clarifiée (11), dans lequel le catalyseur électrochimique dans l'anode (4) et/ou le matériau conducteur biocompatible dans la cathode (6) sont des électrodes à base de carbone, telles que la mousse de carbone, le papier de carbone, le tissu de carbone, le feutre de carbone, la laine de carbone, les nanotubes de carbone, les fibres de carbone, le carbone activé, le carbone vitreux ou le graphite (sous une forme quelconque) ; du graphène, des polymères conducteurs, des électrodes dimensionnellement stables (DSA), du diamant conducteur d'électricité (ECD), tel que du diamant dopé au bore (BDD) ; du cobalt, du cuivre, de l'or, de l'iridium, du fer, du nickel, du palladium, du platine, du ruthénium, de l'argent, de l'acier inoxydable, de l'étain, du titane, du tungstène, et des combinaisons de ceux-ci, une source d'énergie (9) et au moins une membrane échangeuse d'anions et/ou de cations (10) séparant la chambre anodique (1) et la chambre cathodique (5), **caractérisé par** les étapes suivantes :
a) ajouter des micro-organismes bioélectroactifs choisis parmi *Acetitomalacum, Acetoanaerobium, Acetobacterium, Azospira, Blautia, Butyribacterium, Bacteroides, Clostridium, Desulfobacterium, Eubacterium, Geobacter, Geovibrio, Megasphaera, Methanobacterium, Metanobrevibacter, Methanococcus, Morelia, Rhodobacter, Sporomusa, Sulfospirillium* et/ou *Thermoanaerobacter,* et un matériau conducteur biocompatible dans la chambre cathodique (5) ;
b) introduire un courant aqueux (7) dans la chambre cathodique (5) et convertir le CO₂ dissous dans le courant aqueux (7) en composés neutres du carbone (8) ;
c) alimenter une solution contenant du chlorure (2) dans la chambre anodique (1) et transformer la solution contenant du chlorure (2) en composés de chlore (3) en présence d'un catalyseur électrochimique ;
dans lequel une source d'électrons est fournie en totalité ou en partie à partir de l'oxydation électrochimique de la solution contenant du chlorure (2) en composés chlorés (3) dans la chambre anodique (1) et transférée à travers un circuit externe à la cathode (5).

2. Procédé selon la revendication 1, dans lequel le flux aqueux (7) est de l'eau minérale, de l'eau souterraine, de l'eau de mer, de l'eau saumâtre, de l'eau de rejet, de l'eau usée, de l'eau usée traitée, ou d'autres flux d'eau.

3. Procédé selon la revendication 1, dans lequel les micro-organismes bioélectroactifs dans la chambre cathodique (5) sont en suspension dans la solution et/ou sous la forme d'un biofilm fixé sur l'électrode cathodique (6).

4. Procédé selon l'une quelconque des revendications 1-3, dans lequel la solution contenant du chlorure (2) contient des sels de chlorure ou des combinaisons de ceux-ci avec une concentration en chlorure comprise entre 0.1 g L⁻¹ et 150 g L⁻¹.

5. Procédé de l'une quelconque des revendications 1-4, dans lequel le CO₂ est dissous dans le flux aqueux (7) par injection directe dans la chambre cathodique (5) ou à travers une unité d'absorption précédente.

6. Procédé de l'une quelconque des revendications 1-5, dans lequel les composés neutres en carbone (8) sont produits à partir du CO₂ soit par réduction directe des électrons et/ou en utilisant l'hydrogène comme intermédiaire.
